# EUROPÄISCHE PATENTSCHRIFT

(11) **EP 3 296 632 B1**
(45) Veröffentlichungstag und Bekanntmachung des Hinweises auf die Patenterteilung: **09.12.2020**
(21) Anmeldenummer: 17190032.7
(22) Anmeldetag: 08.09.2017
(51) Int. Cl.: F23J 15/02, F23C 9/08, F23G 7/07, F23D 3/40

(54) **BRENNKAMMERBAUGRUPPE FÜR EIN BRENNSTOFFBETRIEBENES FAHRZEUGHEIZGERÄT**
COMBUSTION CHAMBER MODULE FOR A FUEL-POWERED VEHICLE HEATING DEVICE
COMPOSANT DE CHAMBRE DE COMBUSTION POUR UN APPAREIL DE CHAUFFAGE À COMBUSTIBLE POUR UN VÉHICULE

(30) Priorität: 15.09.2016 DE 102016117408
(43) Veröffentlichungstag der Anmeldung: 21.03.2018
(73) Patentinhaber: Eberspächer Climate Control Systems GmbH, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- EP-A1- 0 638 776
- EP-A2- 0 287 923
- DE-A1- 3 919 797
- DE-A1- 3 920 078
- DE-A1- 4 232 181
- DE-A1-102008 002 956
- DE-A1-102014 103 817

## Beschreibung

Die vorliegende Erfindung betrifft eine Brennkammerbaugruppe für ein brennstoffbetriebenes Fahrzeugheizgerät, welches in einem Fahrzeug beispielsweise als Standheizung oder als Zuheizer eingesetzt werden kann.

Aus der DE 103 46 558 B3 ist eine Brennkammerbaugruppe für ein brennstoffbetriebenes Fahrzeugheizgerät bekannt, bei welcher eine durch einen Bodenbereich und eine Umfangswandung begrenzte Brennkammer im Bereich einer Flammblende in einen von einem Flammrohr umgebenen Abgasströmungsraum übergeht. An einem axialen Ende des Flammrohrs ist der Abgasströmungsraum axial offen und die in diesem Bereich aus dem Flammrohr austretenden Verbrennungsabgase gelangen in einen zwischen dem Flammrohr und einem das Flammrohr umgebenden Gehäuse gebildeten Abgasrückströmungsraum. Dabei übertragen die Verbrennungsabgase Wärme auf ein das Gehäuse an seiner von dem Flammrohr abgewandt liegenden Seite umströmendes Wärmeträgermedium, beispielsweise die in einen Fahrzeuginnenraum einzuleitende Luft oder die in einem Kühlmittelkreislauf einer Brennkraftmaschine zirkulierende Kühlflüssigkeit.

Bei einer aus der EP 0 638 776 A1 bekannten Brennkammerbaugruppe ist in einem zwischen einem Flammenrohr und einem dieses umgebenden Gehäuse gebildeten Abgasrückströmungsraum ein katalytisch wirksames Element angeordnet.

Die DE 10 2014 103 817 A1 offenbart eine Brennkammerbaugruppe gemäß dem Oberbegriff des Anspruchs 1, bei welcher in einem Gemischaufbereitungsbereich ein Gemisch aus Brennstoff und Verbrennungsluft bereitgestellt wird und zur Verbrennung in einen als Brennkammer wirksamen Umsetzungsbereich eingeleitet wird. In einem konisch sich verjüngenden Abschnitt geht der Umsetzungsbereich in einen in einem Brennrohr gebildeten Abgasströmungsraum über. Im Bereich des Gemischaufbereitungsbereichs sind Öffnungen vorhanden, über welche ein Teil des in einem Abgasrückströmungsraum an der Außenseite des Brennrohrs und des Umsetzungsbereichs zurückgeleiteten Abgases in das dort erzeugte Gemisch aus Brennstoff und Verbrennungsluft eingeleitet wird und mit diesem Gemisch in die im Umsetzungsbereich gebildete Brennkammer strömt.

Aus der DE 39 20 078 A1 ist ein Brennerkopf für einen Gebläsegasbrenner bekannt, bei welchem im Übergang von einer durch eine Flammblende begrenzten Brennkammer zu einem Flammrohr ein spaltartiger Zwischenraum gebildet ist, durch welchen stromabwärts der Flammblende Verbrennungsabgas in den im Flammrohr ablaufenden Verbrennungsprozess rückgespeist wird.

Es ist die Aufgabe der vorliegenden Erfindung, eine Brennkammerbaugruppe für ein brennstoffbetriebenes Fahrzeugheizgerät vorzusehen, welche mit verringertem Schadstoffausstoß betrieben werden kann.

Erfindungsgemäß wird diese Aufgabe gelöst durch eine Brennkammerbaugruppe für ein brennstoffbetriebenes Fahrzeugheizgerät gemäß Anspruch 1. Diese umfasst ein Brennkammergehäuse mit einer durch eine Umfangswandung und einen Bodenbereich begrenzten Brennkammer, wobei der Bodenbereich einen Verdampfermediumträger und an einer der Brennkammer zugewandten Seite des Verdampfermediumträgers poröses Verdampfermedium umfasst, ein in Richtung einer Gehäuselängsachse auf die Umfangswandung folgendes und einen in Richtung der Gehäuselängsachse offenen Abgasströmungsraum umgebendes Flammrohr und eine Flammblende mit einer Durchströmöffnung, wobei zwischen dem Flammrohr und einem dieses umgebenden Gehäuse ein Abgasrückströmungsraum gebildet ist.

Gemäß der vorliegenden Erfindung ist vorgesehen, dass im axialen Bereich der Flammblende eine Abgasrückführöffnungsanordnung zur Rückführung von in dem Abgasrückströmungsraum strömenden Verbrennungsabgasen in die Brennkammer oder/und den Abgasströmungsraum vorgesehen ist.

Durch die Rückführung eines Teils der im Abgasrückströmungsraum strömenden Verbrennungsabgase in Richtung zur Brennkammer bzw. zum Abgasströmungsraum, also in den ablaufenden Verbrennungsprozess, kann der Schadstoffausstoß, insbesondere der NOx- Gehalt in den Verbrennungsabgasen, deutlich gesenkt werden.

Dabei kann erfindungsgemäß weiter vorgesehen sein, dass in einem ersten axialen Endbereich des Abgasrückströmungsraums der Abgasströmungsraum zum Abgasrückströmungsraum offen ist und in dem Abgasrückströmungsraum eine von im Abgasrückströmungsraum strömenden Verbrennungsabgasen durchströmbare Katalysatoranordnung vorgesehen ist. Diese Katalysatoranordnung kann insbesondere zur Verringerung des CO-Anteils und des HC-Anteils in den Verbrennungsabgasen wirksam sein und führt aufgrund der Integration derselben in den Bereich der Brennkammerbaugruppe zu einer kompakten Bauweise.

Für eine effiziente Rückführung von im Abgasrückströmungsraum strömenden Verbrennungsabgasen in den Verbrennungsprozess ist vorgesehen, dass die Flammblende zusammen mit dem Flammrohr oder/und der Umfangswandung einen Abgasüberführungsraum begrenzt, und dass die Abgasrückführöffnungsanordnung wenigstens eine den Abgasrückströmungsraum mit dem Abgasüberführungsraum verbindende erste Abgasrückführöffnung und wenigstens eine den Abgasüberführungsraum mit der Brennkammer oder/und dem Abgasströmungsraum verbindende zweite Abgasrückführöffnung umfasst.

Dabei kann eine vergleichsweise große Menge von im Abgasrückströmungsraum strömenden Verbrennungsabgasen rückgespeist werden, wenn die Abgasrückführöffnungsanordnung eine Mehrzahl von in Umfangsrichtung vorzugsweise ringartig aufeinanderfolgend angeordneten ersten Abgasrückführöffnungen oder/und eine Mehrzahl von in Umfangsrichtung vorzugsweise ringartig aufeinanderfolgend angeordneten zweiten Abgasrückführöffnungen umfasst. Dabei kann weiter vorgesehen sein, dass wenigstens eine, vorzugsweise jede erste Abgasrückführöffnung bezüglich wenigstens einer, vorzugsweise jeder zweiten Abgasrückführöffnung axial versetzt ist.

Gemäß einem besonders vorteilhaften Ausgestaltungsaspekt kann bei der erfindungsgemäß aufgebauten Brennkammerbaugruppe vorgesehen sein, dass die Durchströmöffnung eine in einer Abgasströmungsrichtung zu einem Scheitelbereich hin abnehmende Strömungsquerschnittsfläche aufweist. Auf diese Art und Weise kann ein Düseneffekt generiert werden, der im Abgasüberführungsraum einen Unterdruck erzeugt und somit darin angesammelte Verbrennungsabgase in den Verbrennungsprozess saugt.

Um diese in Richtung der Strömungsrichtung der Verbrennungsabgase, also in Richtung von der Brennkammer zum Abgasströmungsraum hin abnehmende Strömungsquerschnittsfläche in einfacher Weise bereitstellen zu können, wird vorgeschlagen, dass die Flammblende in einem stromaufwärtigen Verbindungsbereich an die Umfangswandung oder/und das Flammrohr angebunden ist und in einem stromabwärtigen Verbindungsbereich an die Umfangswandung oder/und das Flammrohr angebunden ist und zwischen dem stromaufwärtigen Verbindungsbereich und dem stromabwärtigen Verbindungsbereich eine die Durchströmöffnung radial begrenzende Strömungsführungswandung aufweist, und dass, ausgehend vom ersten Verbindungsbereich, die Strömungsquerschnittsfläche zum Scheitelbereich hin abnimmt.

Der vorangehend angesprochene Düseneffekt kann dann besonders effizient genutzt werden, wenn gemäß einem weiteren vorteilhaften Aspekt vorgesehen ist, dass eine Änderungsrate der Strömungsquerschnittsfläche zwischen dem stromaufwärtigen Verbindungsbereich und dem Scheitelbereich in Richtung der Gehäuselängsachse wenigstens bereichsweise abnimmt. Die Flammblende ist somit nach Art einer für die Strömungsverhältnisse vorteilhaft wirkenden Venturi-Düse aufgebaut.

Um den Unterdruckeffekt bzw. die Ansaugwirkung möglichst effizient nutzen zu können, kann vorgesehen sein, dass wenigstens eine, vorzugsweise jede zweite Abgasrückführöffnung im Bereich des Scheitelbereichs vorgesehen ist.

Für eine weiter verbesserte Strömungsführung bzw. Abgasrückführung kann die Flammblende stromabwärts des Scheitelbereichs eine im Wesentlichen stufenartige Erweiterung des Abgasströmungsraums bereitstellen.

Die Katalysatoranordnung kann in einem zweiten axialen Endbereich des Abgasrückströmungsraums angeordnet sein, kann alternativ jedoch auch in einem Längenmittenbereich oder irgendeinem anderen Längenbereich des Abgasrückströmungsraums positioniert sein.

Beispielsweise kann vorgesehen sein, dass ein die Umfangswandung umgebender Verbrennungsluftzuführraum über eine Mehrzahl von in der Umfangswandung vorgesehenen Verbrennungsluftzuführöffnungen zur Brennkammer offen ist, und dass eine den Verbrennungsluftzuführraum vom Abgasrückströmungsraum trennende Trennwandung vorgesehen ist, wobei die Katalysatoranordnung die Trennwandung umgebend oder/und an die Trennwandung axial anschließend angeordnet ist. Die im katalytischen Prozess entstehende Reaktionswärme kann auf diese Art und Weise auf die in die Brennkammer einzuleitende Verbrennungsluft übertragen werden, so dass diese vorgewärmt in die Brennkammer eintritt. Dies trägt auch zur Kühlung der Katalysatoranordnung bei.

Eine weiter verbesserte Ausnutzung der in der Katalysatoranordnung generierten Wärme sowie eine effiziente Kühlung der Katalysatoranordnung können erreicht werden, wenn die Katalysatoranordnung zwischen der Trennwandung und dem Gehäuse angeordnet ist.

Die erfindungsgemäß aufgebaute Brennkammerbaugruppe kann derart ausgebildet sein, dass das Gehäuse ein im Wesentlichen topfartiges Wärmetauschergehäuse mit einer dem Flammrohr axial gegenüberliegenden Bodenwandung und einer das Flammrohr umgebenden und den Abgasrückströmungsraum nach radial außen begrenzenden Wärmetauschergehäuse-Umfangswandung ist.

Die vorliegende Erfindung betrifft ferner ein Fahrzeugheizgerät, umfassend eine erfindungsgemäß aufgebaute Brennkammerbaugruppe.

Die Erfindung wird nachfolgend mit Bezug auf die Figuren detailliert beschrieben. Es zeigt:
- Fig. 1: eine Längsschnittansicht einer brennstoffbetriebenen Brennkammerbaugruppe für ein Fahrzeugheizgerät;
- Fig. 2: eine der Fig. 1 entsprechende Ansicht einer alternativen Ausgestaltung, welche nicht Teil der Erfindung ist.

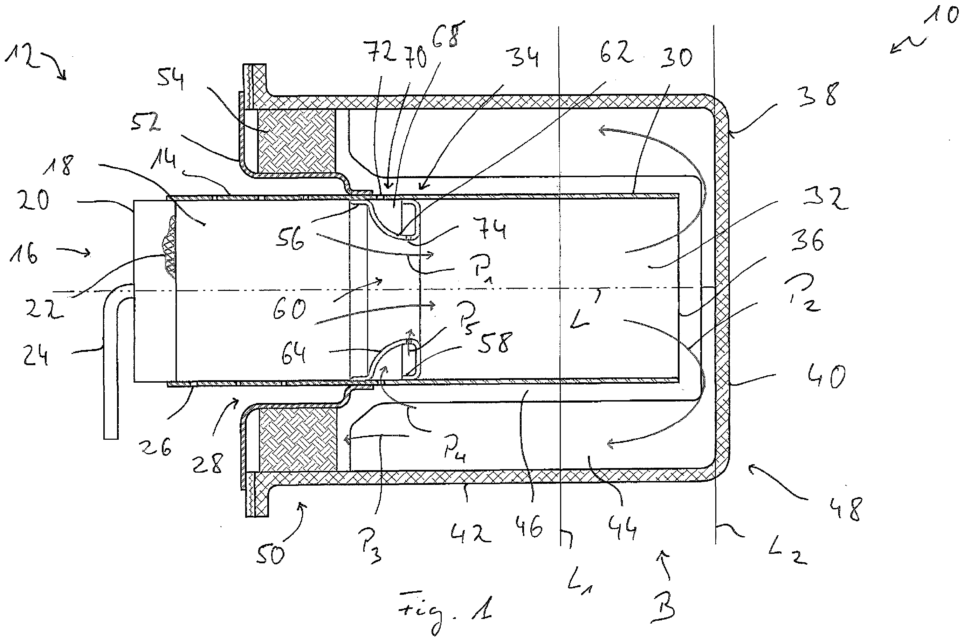

Die in Fig. 1 dargestellte Brennkammerbaugruppe 10 umfasst ein allgemein mit 12 bezeichnetes Brennkammergehäuse. Das Brennkammergehäuse 12 umgrenzt mit einer Umfangswandung 14 und einem Bodenbereich 16 eine Brennkammer 18. Der Bodenbereich 16 kann mit einem beispielsweise topfartig ausgebildeten Verdampfermediumträger 20 und einem an dessen der Brennkammer 18 zugewandten Seite getragenen porösen Verdampfermedium 22 aufgebaut sein. Über eine Brennstoffzuführleitung 24 wird von einer Brennstoffzuführanordnung, beispielsweise Dosierpumpe, zugeführter flüssiger Brennstoff in das poröse Verdampfermedium 22 eingespeist und von diesem in Richtung zur Brennkammer 18 abgedampft. Um insbesondere in einer Startphase des Verbrennungsbetriebs die Brennstoffabdampfung zu unterstützen, kann der Bodenbereich 16 an der von der Brennkammer 18 abgewandten Seite des porösen Verdampfermediums 22 oder/und des Verdampfermediumträgers 20 eine elektrisch erregbare Heizeinrichtung umfassen.

Zur Zufuhr von Verbrennungsluft in die Brennkammer 18 weist die Umfangswandung 14 eine Mehrzahl von Verbrennungsluftzuführöffnungen 26 auf. Über diese Verbrennungsluftzufuhröffnungen 26 ist ein die Umfangswandung 14 bzw. die Brennkammer 18 vorzugsweise ringartig umgebender Verbrennungsluftzuführraum 28 zur Brennkammer 18 offen. Durch eine nicht dargestellte Verbrennungsluftzuführanordnung, beispielsweise Seitenkanalgebläse, kann die für die Verbrennung erforderliche Luft in Richtung zum Verbrennungsluftzuführraum 28 gefördert werden.

Ein im dargestellten Ausgestaltungsbeispiel mit der Umfangswandung 14 integral ausgebildetes Flammrohr 30 schließt in Richtung einer Gehäuselängsachse L an die Umfangswandung 14 an. Im Inneren des Flammrohrs 30 ist ein Abgasströmungsraum 32 gebildet, in welchen die die Brennkammer 18 im Bereich einer allgemein mit 34 bezeichneten Flammblende verlassenden Verbrennungsabgase, wie durch Strömungspfeile P₁ angedeutet, eintreten. Es ist darauf hinzuweisen, dass im Sinne der vorliegenden Erfindung die im Wesentlichen in Richtung der Gehäuselängsachse L aus der Brennkammer 18 in den Abgasströmungsraum 32 strömenden Verbrennungsabgase in diesem Bereich der Brennkammerbaugruppe 10 eine Strömungsrichtung und, bezogen auf diese Strömungsrichtung, stromaufwärts bzw. stromabwärts positionierte Systembereiche definieren.

Der Abgasströmungsraum 32 ist an einem von der Umfangswandung 14 entfernt liegenden axialen Endbereich 36 des Flammrohrs 30 offen. Das Flammrohr 30 bzw. das Brennkammergehäuse 12 ist von einem topfartigen Gehäuse 38 umgeben, welches eine dem axialen Endbereich 36 des Flammrohrs 30 gegenüberliegende Bodenwandung 40 und eine das Flammrohr 30 bzw. bereichsweise auch die Umfangswandung 14 radial außen umgebende Wärmetauschergehäuse-Umfangswandung 42 aufweist. Das Gehäuse 38 kann das Innere von ineinander eingesetzten topfartigen Wärmetauschergehäusen sein, welche zwischen sich einen Strömungsraum für ein flüssiges Wärmeträgermedium begrenzen. Wird die Brennkammerbaugruppe 10 in Verbindung mit einem Luftheizgerät eingesetzt, kann das Gehäuse 38 an seiner vom Flammrohr 30 abgewandten Außenseite von der zu erwärmenden Luft umströmt werden. Um den Wärmeübertrag von den Verbrennungsabgasen auf das Gehäuse 38 zu verbessern, kann dieses an seiner dem Flammrohr 30 zugewandten Innenseite im Bereich der Bodenwandung 40 oder/und im Bereich der Wärmetauschergehäuse-Umfangswandung 42 Wärmeübertragungsrippen 44 aufweisen.

Die den Abgasströmungsraum 32 am axialen Endbereich 36 des Flammrohrs 30 verlassenden Verbrennungsabgase werden, wie durch Strömungspfeile P₂ angedeutet, an der Bodenwandung 40 axial umgelenkt und treten somit in einen Abgasrückströmungsraum 46 im Bereich von dessen ersten axialen Endbereich 48 ein. Wie durch einen Strömungspfeil P₃ angedeutet, strömen die Verbrennungsabgase in Richtung auf einen zweiten axialen Endbereich 50 des Abgasrückströmungsraums 46 zu. Dieser zweite axiale Endbereich 50 des Abgasrückströmungsraums 46 kann mit der Brennkammer 18 bzw. der Umfangswandung 14 sich zumindest bereichsweise axial überlappend positioniert sein. Im zweiten axialen Endbereich können die den Abgasrückströmungsraum 46 durchströmenden Abgase den Abgasrückströmungsraum 46 über einen nicht dargestellten Abgasauslass, beispielsweise in der Trennwandung 52 oder der Umfangswandung 42 des topfartigen Gehäuses 38, verlassen.

In dem zweiten axialen Endbereich 50 ist der Abgasrückströmungsraum 46 nach radial innen und in axialer Richtung durch eine außen an die Umfangswandung 14 bzw. das Flammrohr 30 angebundene Trennwandung 52 begrenzt. Die Trennwandung 52 trennt somit in diesem zweiten axialen Endbereich 50 den Abgasrückströmungsraum 46 vom Verbrennungsluftzuführraum 28.

In diesem Bereich des Abgasrückströmungsraums 46 kann eine beispielweise ringartig ausgestaltete Katalysatoranordnung 54, insbesondere Oxidationskatalysatoranordnung, unter leichter Presspassung zwischen der Trennwandung 52 und der Wärmetauschergehäuse-Umfangswandung 42 gehalten sein. Die Katalysatoranordnung 54 kann beispielsweise ein mit Katalysatormaterial beschichtetes Edelstahlgeflecht aufweisen. Die den Abgasrückströmungsraum 46 durchströmenden Verbrennungsabgase bzw. zumindest ein Teil davon durchströmen die Katalysatoranordnung 54, so dass bei der an der Oberfläche des katalytischen Materials ablaufenden Reaktion in den Verbrennungsabgasen enthaltenes CO und HC zu CO₂ und H₂O reagieren, so dass der Schadstoffausstoß gesenkt wird. Nach Durchströmen der Katalysatoranordnung 54 verlassen die Verbrennungsabgase den Abgasrückströmungsraum 46 beispielsweise axial im Bereich einer in der Trennwandung 52 vorgesehenen Öffnung zu einem Abgasführungssystem hin.

Ein Teil der bei der katalytischen Reaktion entstehenden Wärme kann einerseits auf die im Verbrennungsluftzuführraum 28 in Richtung zur Brennkammer 18 strömende Verbrennungsluft übertragen werden, um diese vorzuwärmen. Ein weiterer Teil der Reaktionswärme kann auf die Wärmetauschergehäuse-Umfangswandung 42 und über diese auf das zu erwärmende Wärmeträgermedium übertragen werden. Auf diese Art und Weise wird einerseits die Katalysatoranordnung 54 gekühlt und vor Überhitzung geschützt, andererseits wird die in der katalytischen Reaktion generierte Wärme effizient genutzt.

Die im Wesentlichen einen Bereich des Übergangs von der Brennkammer 18 zum Abgasströmungsraum 32 definierende Flammblende 34 ist mit zwei in Richtung der Gehäuselängsachse L zueinander versetzt liegenden Verbindungsbereichen 56, 58 an die Umfangswandung 14 bzw. Flammrohr 30 angebunden. Ausgehend von dem der Brennkammer 18 zugewandt liegenden, stromaufwärtigen Verbindungsbereich 56 verjüngt sich eine in der Flammblende 34 ausgebildete Durchströmöffnung 60 bis zu einer im Bereich eines Scheitelbereichs 62 der Flammblende 34 bereitgestellten minimalen Strömungsquerschnittsfläche. Im Bereich zwischen dem stromaufwärtigen Verbindungsbereich 56 und dem Scheitelbereich 62 stellt die Flammblende 34 eine Strömungsführungswandung 64 bereit. Diese ist konvex gekrümmt, so dass zwischen dem stromaufwärtigen Verbindungsbereich 56 und dem Scheitelbereich 62 die Änderungsrate der Strömungsquerschnittsfläche abnimmt. In dem Bereich der Strömungsführungswandung 64, welcher an den stromaufwärtigen Verbindungsbereich 56 angrenzt, ist die Abnahme der Strömungsquerschnittsfläche, bezogen auf eine Längeneinheit in Richtung der Gehäuselängsachse L, maximal. Im Bereich des Scheitelbereichs 62 ist die Änderungsrate minimal bzw. bei null.

Angrenzend an den Scheitelbereich 62 stellt die Flammblende 34 im Übergang zum Flammrohr 30 eine stufenartige Erweiterung der Strömungsquerschnittsfläche bereit.

Die mit ihrer vorangehend beschriebenen Geometrie nach Art einer Venturi-Düse ausgebildete Flammblende 34 begrenzt zusammen mit dem diese umgebenden Bereich der Umfangswandung 14 bzw. des Flammrohrs 30 einen die Gehäuselängsachse L vorzugsweise unterbrechungsfrei und ringartig umgebenden Abgasüberführungsraum 68. Eine Abgasrückführöffnungsanordnung 70 umfasst in der Umfangswandung 14 bzw. im Flammrohr 30, grundsätzlich also einer den Abgasüberführungsraum 68 nach radial außen begrenzenden Wandung, eine Mehrzahl von in Umfangsrichtung vorzugsweise in ringartiger Struktur aufeinanderfolgend angeordneten ersten Abgasrückführöffnungen 72. Über die ersten Abgasrückführöffnungen 72 ist der Abgasrückströmungsraum 46 zum Abgasüberführungsraum 68 offen. Die Abgasrückführöffnungsanordnung 70 umfasst ferner eine Mehrzahl von in Umfangsrichtung vorzugsweise in ringartiger Struktur aufeinanderfolgend angeordneten zweiten Abgasrückführöffnungen 74 in der Flammblende 34, insbesondere im Scheitelbereich 62 derselben. Über die zu den ersten Abgasrückführöffnungen 72 in Richtung der Gehäuselängsachse L versetzt angeordneten zweiten Abgasrückführöffnungen 74 ist der Abgasüberführungsraum 68 zur Brennkammer 18 bzw. zum Abgasströmungsraum 32 offen, insbesondere in einem Übergangsbereich von der Brennkammer 18 zum Abgasströmungsraum 32. Der Abgasüberführungsraum 68 stellt somit über die Abgasrückführöffnungsanordnung 70 eine Verbindung zwischen dem Abgasrückströmungsraum 46 und der Brennkammer 18 bzw. dem Abgasströmungsraum 32 bereit.

Bei im Wesentlichen in der Brennkammer 18 ablaufender Verbrennung strömen die Verbrennungsabgase durch die Durchströmöffnung 60. Aufgrund der abnehmenden Strömungsquerschnittsfläche und des so generierten Venturi-Effekts entsteht ein Unterdruck bezüglich des Abgasüberführungsraums 68. Dies bedeutet, dass über die ersten Abgasrückführöffnungen 72 in den Abgasüberführungsraum 68 gesaugte Verbrennungsabgase, wie durch Strömungspfeile P₄ und P₅ angedeutet, in den Bereich der Brennkammer 18 bzw. in den Bereich des Abgasströmungsraum 32 gelangen und somit in den Verbrennungsprozess rückgespeist werden. Durch diese Rückspeisung von Verbrennungsabgasen kann der Schadstoffausstoß, insbesondere der NOx- Anteil in den Verbrennungsabgasen, deutlich gemindert werden. Dazu trägt im Wesentlichen bei, dass der größte Teil der in den Verbrennungsabgasen transportierten Wärme nahe dem ersten axialen Endbereich 48 des Abgasrückströmungsraums 46 über das Gehäuse 38 auf das Wärmeträgermedium übertragen wird. In einem zwischen zwei Linien L₁, L₂ eingegrenzten axialen Bereich B, welcher etwa 1/3 der axialen Erstreckung des Abgasrückströmungsraum 46 umfasst, werden etwa 80 % der zu übertragenden Wärme auf das Gehäuse 38 und somit das Wärmeträgermedium übertragen. Im Bereich der Abgasrückführöffnungsanordnung 70 sind die Verbrennungsabgase somit bereits deutlich abgekühlt, so dass deren Rückspeisung in den Verbrennungsprozess aufgrund der dadurch hervorgerufenen Absenkung der Verbrennungstemperatur zu einem verringerten NOx-Anteil in den Verbrennungsabgasen beiträgt.

Mit der erfindungsgemäß aufgebauten Brennkammerbaugruppe 10 kann sowohl durch die aufgrund der speziellen Geometrie der Flammblende 34 erzwungene Rückspeisung von Verbrennungsabgasen in den Verbrennungsprozess, als auch durch das Durchströmen einer Katalysatoranordnung vor dem Austritt der Verbrennungsabgase aus der Brennkammerbaugruppe 10 ein deutlich gesenkter Schadstoffausstoß erreicht werden. Vorteilhafterweise sind diese beiden Maßnahmen in der Brennkammerbaugruppe 10 in Verbindung miteinander vorgesehen. Jede der Maßnahmen kann jedoch auch für sich alleine, ohne dass notwendigerweise auch die andere Maßnahme vorgesehen ist, einen verringerten Schadstoffanteil in den aus der Brennkammerbaugruppe 10 ausgestoßenen Abgasen bewirken.

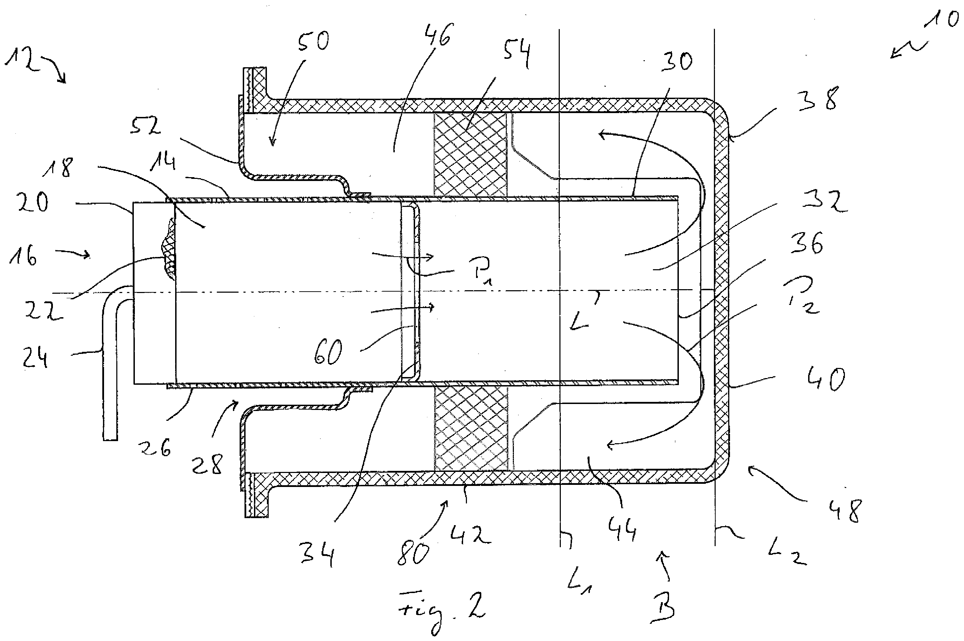

Die Fig. 2 zeigt eine alternative Ausgestaltungsart einer Brennkammerbaugruppe 10, welche nicht Teil der Erfindung ist und welche hinsichtlich ihres grundsätzlichen Aufbaus im Wesentlichen dem vorangehend mit Bezug auf die Fig. 1 beschriebenen Aufbau entspricht. Es kann diesbezüglich auf die voranstehenden Ausführungen verwiesen werden.

Zu erkennen ist in Fig. 2, dass die Katalysatoranordnung 54 in einem Längenmittenbereich 80 des Abgasrückströmungsraums 46 angeordnet ist. Die Katalysatoranordnung 54 liegt somit, bezogen auf die Strömungsrichtung des Abgases im Abgasrückströmungsraums 46, stromaufwärts der Positionierung der Flammblende 34 im Abgasströmungsraum 32. Um eine derartige Positionierung der Katalysatoranordnung 54 zu ermöglichen, können beispielsweise die am topfartigen Gehäuse 38 vorgesehenen Wärmeübertragungsrippen 44 axial kürzer ausgebildet sein, als bei dem in Fig. 1 dargestellten Ausgestaltungsbeispiel. Die Katalysatoranordnung 54 kann beispielsweise unter leichter radialer Presspassung zwischen der Umfangswandung 42 des topfartigen Gehäuses 38 und dem Flammrohr 30 gehalten sein.

Es sei bezüglich dieser Positionierung der Katalysatoranordnung 54 darauf hingewiesen, dass der Längenmittenbereich 80 des Abgasrückströmungsraums 46, beispielsweise ausgehend vom ersten axialen Endbereich 48 bzw. der Bodenwandung 40 des topfartigen Gehäuses 38, einen Längenbereich von etwa 30% bis etwa 70 %, vorzugsweise etwa 40 % bis etwa 60 %, der gesamten axialen Erstreckungslänge des Abgasrückströmungsraums 46 umfassen kann.

Bei der in Fig. 2 dargestellten Ausgestaltungsart einer Brennkammerbaugruppe 10 sind beispielsweise keine die Rückführung von Abgasen in den Verbrennungsprozess zulassende Öffnungen im Flammrohr 30 bzw. der Umfangswandung 14 vorgesehen. Die Flammblende 34 kann daher herkömmlich ausgebildet sein und beispielsweise durch ein in seinem Außenumfangsbereich axial abgekrümmtes und an die Innenumfangsfläche des Flammrohrs 30 bzw. der Umfangswandung 14 angebundenes, im wesentlichen planares Blechteil bereitgestellt sein.

Selbstverständlich können auch bei dieser Ausgestaltungsart die anhand der Ausgestaltungsform der Figur 1 dargestellten konstruktiven Ausgestaltungsaspekte vorgesehen sein, welche eine Rückführung eines Teils des im Abgasrückströmungsraum 46 strömenden Abgases in den Abgasströmungsraum 32 bzw. den Verbrennungsprozess zulassen. Auch ist darauf hinzuweisen, dass die Katalysatoranordnung 54 auch an anderer Positionierung, beispielsweise an oder nahe dem ersten axialen Endbereich 48 vorgesehen sein kann, insbesondere wenn diese aus thermischen Gründen zur Durchführung der katalytischen Reaktion vorteilhaft ist. In diesem Falle könnte das topfartige Gehäuse 38 zweiteilig ausgebildet sein und eine Umfangswandung mit daran vorgesehenen Wärmeübertragungsrippen und eine separat ausgebildete Bodenwandung umfassen. Die Katalysatoranordnung 54 könnte dann zunächst in den von der Umfangswandung umgebenen Raum angrenzend an die Wärmeübertragungsrippen eingesetzt werden, woraufhin die Bodenwandung angebracht wird, um die topfartigen Struktur des Gehäuses 38 bereitzustellen.

Abschließend wird darauf hingewiesen, dass die vorangehend beschriebene Brennkammerbaugruppe in verschiedensten Aspekten variiert werden kann, ohne von den Prinzipien der vorliegenden Erfindung abzuweichen. So könnte beispielsweise die Flammblende mit der die Brennkammer umgebenden Umfangswandung integral ausgebildet sein oder/und könnte mit dem axial auf diese Umfangswandung folgenden Flammrohr integral ausgebildet sein. Auch müssen nicht notwendigerweise die Umfangswandung und das Flammrohr durch ein einziges Bauteil als integrale Bestandteile desselben bereitgestellt sein. So könnte beispielsweise das Flammrohr auch integral mit der Trennwandung aufgebaut sein. Auch die Flammblende könnte als integraler Bestandteil der Trennwandung bereitgestellt sein, während die Umfangswandung und das Flammrohr als separate Bauteile vorgesehen sind. Das Anbinden der Flammblende beispielsweise an das Flammrohr oder die Umfangswandung umfasst im Sinne der vorliegenden Erfindung also sowohl das Verbinden zweier getrennter Bauteile, beispielsweise durch Materialschluss, als auch das integrale Bereitstellen zweier Systembereiche wie zum Beispiel Flammblende und Umfangswandung, als Bestandteile eines Bauteils

## Patentansprüche

1. Brennkammerbaugruppe für ein brennstoffbetriebenes Fahrzeugheizgerät, umfassend ein Brennkammergehäuse (12) mit einer durch eine Umfangswandung (14) und einen Bodenbereich (16) begrenzten Brennkammer (18), wobei der Bodenbereich (16) einen Verdampfermediumträger (20) und an einer der Brennkammer (18) zugewandten Seite des Verdampfermediumträgers (20) poröses Verdampfermedium (22) umfasst, ein in Richtung einer Gehäuselängsachse (L) auf die Umfangswandung (14) folgendes und einen in Richtung der Gehäuselängsachse (L) offenen Abgasströmungsraum (32) umgebendes Flammrohr (30) und eine Flammblende (34) mit einer Durchströmöffnung (60), wobei zwischen dem Flammrohr (30) und einem dieses umgebenden Gehäuse (38) ein Abgasrückströmungsraum (46) gebildet ist, und im axialen Bereich der Flammblende (34) eine Abgasrückführöffnungsanordnung (70) zur Rückführung von in dem Abgasrückströmungsraum (46) strömenden Verbrennungsabgasen in die Brennkammer oder/ und den Abgasströmungsraum vorgesehen ist, **dadurch gekennzeichnet, dass** die Brennkammer verlassende Verbrennungsabgase im Bereich der Flammblende (34) in den Abgasströmungsraum (32) eintreten und dass die Flammblende (34) zusammen mit dem Flammrohr (30) oder/und der Umfangswandung (14) einen Abgasüberführungsraum (68) begrenzt, und dass die Abgasrückführöffnungsanordnung (70) wenigstens eine den Abgasrückströmungsraum (46) mit dem Abgasüberführungsraum (68) verbindende erste Abgasrückführöffnung (72) und wenigstens eine den Abgasüberführungsraum (68) mit der Brennkammer (18) oder/und dem Abgasströmungsraum (32) verbindende zweite Abgasrückführöffnung (74) umfasst.

2. Brennkammerbaugruppe nach Anspruch 1, **dadurch gekennzeichnet, dass** in einem ersten axialen Endbereich (48) des Abgasrückströmungsraums (46) der Abgasströmungsraum (32) zum Abgasrückströmungsraum (46) offen ist und in dem Abgasrückströmungsraum (46) eine von im Abgasrückströmungsraum (46) strömenden Verbrennungsabgasen durchströmbare Katalysatoranordnung (54) vorgesehen ist.

3. Brennkammerbaugruppe nach Anspruch 1 oder 2, **dadurch gekennzeichnet, dass** die Abgasrückführöffnungsanordnung (70) eine Mehrzahl von in Umfangsrichtung vorzugsweise ringartig aufeinanderfolgend angeordneten ersten Abgasrückführöffnungen (72) oder/und eine Mehrzahl von in Umfangsrichtung vorzugsweise ringartig aufeinanderfolgend angeordneten zweiten Abgasrückführöffnungen (74) umfasst.

4. Brennkammerbaugruppe nach Anspruch 1, 2 oder 3, **dadurch gekennzeichnet, dass** wenigstens eine, vorzugsweise jede erste Abgasrückführöffnung (72) bezüglich wenigstens einer, vorzugsweise jeder zweiten Abgasrückführöffnung (74) axial versetzt ist.

5. Brennkammerbaugruppe nach einem der vorangehenden Ansprüche, **dadurch gekennzeichnet, dass** die Durchströmöffnung (60) eine in einer Abgasströmungsrichtung zu einem Scheitelbereich (62) hin abnehmende Strömungsquerschnittsfläche aufweist.

6. Brennkammerbaugruppe nach Anspruch 5, **dadurch gekennzeichnet, dass** die Flammblende (34) in einem stromaufwärtigen Verbindungsbereich (56) an die Umfangswandung (14) oder/und das Flammrohr (30) angebunden ist und in einem stromabwärtigen Verbindungsbereich (58) an die Umfangswandung (14) oder/und das Flammrohr (30) angebunden ist und zwischen dem stromaufwärtigen Verbindungsbereich (56) und dem stromabwärtigen Verbindungsbereich (58) eine die Durchströmöffnung (60) radial begrenzende Strömungsführungswandung (64) aufweist, und dass, ausgehend vom stromaufwärtigen Verbindungsbereich (56), die Strömungsquerschnittsfläche (60) zum Scheitelbereich (62) hin abnimmt.

7. Brennkammerbaugruppe nach Anspruch 6, **dadurch gekennzeichnet, dass** eine Änderungsrate der Strömungsquerschnittsfläche (60) zwischen dem stromaufwärtigen Verbindungsbereich (56) und dem Scheitelbereich (62) in Richtung der Gehäuselängsachse (L) wenigstens bereichsweise abnimmt.

8. Brennkammerbaugruppe nach Anspruch 4 und einem der Ansprüche 5-7, **dadurch gekennzeichnet, dass** wenigstens eine, vorzugsweise jede zweite Abgasrückführöffnung (74) im Bereich des Scheitelbereichs (62) vorgesehen ist.

9. Brennkammerbaugruppe nach einem der Ansprüche 5-8, **dadurch gekennzeichnet, dass** stromabwärts des Scheitelbereichs (62) die Flammblende (34) eine im Wesentlichen stufenartige Erweiterung des Abgasströmungsraums (32) bereitstellt.

10. Brennkammerbaugruppe nach einem der Ansprüche 2-4 oder einem der Ansprüche 5-9, sofern auf Anspruch 2 rückbezogen, **dadurch gekennzeichnet, dass** die Katalysatoranordnung (54) in einem zweiten axialen Endbereich (50) des Abgasrückströmungsraums (46) vorgesehen ist.

11. Brennkammerbaugruppe nach einem der Ansprüche 2-4 oder 10 oder nach einem der Ansprüche 5-9, sofern auf Anspruch 2 rückbezogen, **dadurch gekennzeichnet, dass** die Katalysatoranordnung (54) in einem Längenmittenbereich (80) des Abgasrückströmungsraums (46) angeordnet ist.

12. Brennkammerbaugruppe nach einem der Ansprüche 2-4 oder 10 oder 11 oder nach einem der Ansprüche 5-9, sofern auf Anspruch 2 rückbezogen, **dadurch gekennzeichnet, dass** ein die Umfangswandung (14) umgebender Verbrennungsluftzuführraum (28) über eine Mehrzahl von in der Umfangswandung (14) vorgesehenen Verbrennungsluftzuführöffnungen (26) zur Brennkammer (18) offen ist, und dass eine den Verbrennungsluftzuführraum (28) vom Abgasrückströmungsraum (46) trennende Trennwandung (52) vorgesehen ist, wobei die Katalysatoranordnung (54) die Trennwandung (52) umgebend oder/und an die Trennwandung (52) axial anschließend angeordnet ist.

13. Brennkammerbaugruppe nach Anspruch 12, **dadurch gekennzeichnet, dass** die Katalysatoranordnung (54) zwischen der Trennwandung (52) und dem Gehäuse (38) angeordnet ist.

14. Brennkammerbaugruppe nach einem der vorangehenden Ansprüche, **dadurch gekennzeichnet, dass** das Gehäuse (38) ein im Wesentlichen topfartiges Wärmetauschergehäuse mit einer dem Flammrohr (30) axial gegenüberliegenden Bodenwandung (40) und einer das Flammrohr (30) umgebenden und den Abgasrückströmungsraum (46) nach radial außen begrenzenden Wärmetauschergehäuse-Umfangswandung (42) ist.

15. Fahrzeugheizgerät, umfassend eine Brennkammerbaugruppe (10) nach einem der vorangehenden Ansprüche.

## Claims

1. Combustion chamber assembly unit for a fuel-operated vehicle heater, comprising a combustion chamber housing (12) with a combustion chamber (18) defined by a circumferential wall (14) and by a bottom area (16); wherein the bottom area (16) comprises an evaporator medium carrier (20) and a porous evaporator medium (22) on a side of the evaporator medium carrier (20) facing the combustion chamber (18), a flame tube (30), which follows the circumferential wall (14) in the direction of a housing longitudinal axis (L) and encloses a waste gas flow space (32) open in the direction of the housing longitudinal axis (L), and a flame diaphragm (34) with a flow-through opening (60), wherein a waste gas backflow space (46) is formed between the flame tube (30) and a housing (38) enclosing said flame tube and a waste gas return opening device (70) is provided in the axial area of the flame diaphragm (34) for returning combustion waste gases flowing in the waste gas backflow space (46) into the combustion chamber or/and into the waste gas flow space, **characterized in that** the combustion waste gases leaving the combustion chamber enter the waste gas flow space (32) in the area of the flame diaphragm (34) and **in that** the flame diaphragm (34) defines a waste gas transfer space (68) together with the flame tube (30) or/and with the circumferential wall (14), and that the waste gas return opening device (70) comprises at least one first waste gas return opening (72) connecting the waste gas backflow space (46) to the waste gas transfer space (68) and at least one second waste gas return opening (74) connecting the waste gas transfer space (68) to the combustion chamber (18) or/and to the waste gas flow space (32).

2. Combustion chamber assembly according to claim 1, **characterized in that** the waste gas flow space (32) is open towards the waste gas backflow space (46) in a first axial end area (48) of the waste gas backflow space (46) and a catalytic converter device (54), through which combustion waste gases flowing in the waste gas backflow space (46) can flow, is provided in the waste gas backflow space (46).

3. Combustion chamber assembly unit in accordance with claim 1 or 2, **characterized in that** the waste gas return opening device (70) comprises a plurality of first waste gas return openings (72) arranged following each other in the circumferential direction preferably in a ring-like manner or/and a plurality of second waste gas return openings (74) arranged following each other in the circumferential direction preferably in a ring-like manner.

4. Combustion chamber assembly unit in accordance with claim 1, 2 or 3, **characterized in that** at least one and preferably each first waste gas return opening (72) is offset axially in relation to at least one and preferably each second waste gas return opening (74).

5. Combustion chamber assembly unit in accordance with one of the above claims, **characterized in that** the flow-through opening (60) has a flow cross-sectional area decreasing in a waste gas flow direction towards a vertex area (62).

6. Combustion chamber assembly unit in accordance with claim 5, **characterized in that** the flame diaphragm (34) is connected in an upstream connection area (56) to the circumferential wall (14) or/and to the flame tube (30) and is connected in a downstream connection area (58) to the circumferential wall (14) or/and to the flame tube (30) and has a flow guide wall (64) radially defining the flow-through opening (60) between the upstream connection area (56) and the downstream connection area (58), and that, starting from the upstream connection area (56), the flow cross-sectional area (60) decreases towards the vertex area (62).

7. Combustion chamber assembly unit in accordance with claim 6, **characterized in that** a rate of change in the flow cross-sectional area (60) between the upstream connection area (56) and the vertex area (62) decreases in at least some areas in the direction of the housing longitudinal axis (L).

8. Combustion chamber assembly unit in accordance with claim 4 and one of the claims 5-7, **characterized in that** at least one and preferably every other waste gas return opening (74) is provided in the area of the vertex area (62).

9. Combustion chamber assembly unit in accordance with one of the claims 5-8, **characterized in that** the flame diaphragm (34) provides an essentially stepwise expansion of the waste gas flow space (32) downstream of the vertex area (62).

10. Combustion chamber assembly unit in accordance with one of the claims 2-4 or 5-9 if referring back to claim 2, **characterized in that** the catalytic converter device (54) is provided in a second axial end area (50) of the waste gas backflow space (46).

11. Combustion chamber assembly unit in accordance with one of the claims 2-4 or 10 or in accordance with one of the claims 5-9, if referring back to claim 2, **characterized in that** the catalytic converter device (54) is arranged in a central longitudinal area (80) of the waste gas backflow space (46).

12. Combustion chamber assembly unit in accordance with one of the claims 2-4 or 10 or 11 or in accordance with one of the claims 5-9, if referring back to claim 2, **characterized in that** a combustion air feed space (28) enclosing the circumferential wall (14) is open towards the combustion chamber (18) via a plurality of combustion air feed openings (26) provided in the circumferential wall (14) and that a partition (52) separating the combustion air feed space (28) from the waste gas backflow space (46) is provided, wherein the catalytic converter device (54) is arranged such that it encloses the partition (52) or/and axially adjoins the partition (52).

13. Combustion chamber assembly unit in accordance with claim 12, **characterized in that** the catalytic converter device (54) is arranged between the partition (52) and the housing (38).

14. Combustion chamber assembly unit in accordance with one of the above claims, **characterized in that** the housing (38) is an essentially pot-shaped heat exchanger housing with a bottom wall (40) located axially opposite the flame tube (30) and with a heat exchanger housing circumferential wall (42) enclosing the flame tube (30) and radially outwardly defining the waste gas backflow space (46).

15. Vehicle heater, comprising a combustion chamber assembly unit (10) in accordance with one of the above claims.

## Revendications

1. Module de chambre de combustion pour un chauffage de véhicule fonctionnant au carburant, comprenant un boîtier de chambre de combustion (12) avec une chambre de combustion (18) définie par une paroi circonférentielle (14) et une zone de fond (16) ; dans lequel la zone de fond (16) comprend un support de médium d'évaporation (20) et un médium d'évaporation poreux (22) sur un côté du support de médium d'évaporation (20) orienté vers la chambre de combustion (18), un tube de flamme (30), qui suit la paroi circonférentielle (14) dans la direction d'un axe longitudinal de boîtier (L) et qui entoure un espace d'écoulement des gaz d'échappement (32) ouvert dans la direction de l'axe longitudinal de boîtier (L), et un diaphragme de flamme (34) avec une ouverture de passage (60), dans lequel un espace de retour des gaz d'échappement (46) est formé entre le tube de flamme (30) et un boîtier (38) entourant ledit tube de flamme et un dispositif d'ouverture de retour des gaz d'échappement (70) est prévu dans la zone axiale du diaphragme de flamme (34) pour renvoyer les gaz d'échappement de combustion s'écoulant dans l'espace de retour des gaz d'échappement (46) dans la chambre de combustion et/ou dans l'espace d'écoulement des gaz d'échappement, **caractérisé en ce que** les gaz d'échappement de combustion quittant la chambre de combustion entrent dans l'espace d'écoulement des gaz d'échappement (32) dans la zone du diaphragme de flamme (34) et **en ce que** le diaphragme de flamme (34) définit un espace de transfert des gaz d'échappement (68) avec le tube de flamme (30) et/ou avec la paroi circonférentielle (14), et que le dispositif d'ouverture de retour des gaz d'échappement (70) comprend au moins une première ouverture de retour des gaz d'échappement (72) reliant l'espace de retour des gaz d'échappement (46) à l'espace de transfert des gaz d'échappement (68) et au moins une deuxième ouverture de retour des gaz d'échappement (74) reliant l'espace de transfert des gaz d'échappement (68) à la chambre de combustion (18) et/ou à l'espace d'écoulement des gaz d'échappement (32).

2. Module de chambre de combustion selon la revendication 1, **caractérisé en ce que** l'espace d'écoulement des gaz d'échappement (32) est ouvert vers l'espace de retour des gaz d'échappement (46) dans une première zone d'extrémité axiale (48) de l'espace de retour des gaz d'échappement (46) et un dispositif de catalyseur (54), à travers lequel les gaz d'échappement de combustion s'écoulant dans l'espace de retour des gaz d'échappement (46) peuvent passer, est prévu dans l'espace de retour des gaz d'échappement (46).

3. Module de chambre de combustion selon la revendication 1 ou 2, **caractérisée en ce que** le dispositif d'ouverture de retour des gaz d'échappement (70) comprend une pluralité de premières ouvertures de retour des gaz d'échappement (72) disposées les unes à la suite des autres dans la direction circonférentielle, de préférence de manière annulaire et/ou une pluralité de deuxièmes ouvertures de retour des gaz d'échappement (74) disposées les unes à la suite des autres dans la direction circonférentielle, de préférence de manière annulaire.

4. Module de chambre de combustion selon la revendication 1, 2 ou 3, **caractérisée en ce qu'**au moins une et de préférence chaque première ouverture de retour des gaz d'échappement (72) est décalée axialement par rapport à au moins une et de préférence chaque deuxième ouverture de retour des gaz d'échappement (74).

5. Module de chambre de combustion selon l'une des revendications précédentes, **caractérisée en ce que** l'ouverture de passage (60) présente une section transversale d'écoulement qui diminue dans le sens d'écoulement des gaz d'échappement vers une zone de sommet (62).

6. Module de chambre de combustion selon la revendication 5, **caractérisée en ce que** le diaphragme de flamme (34) est relié dans une zone de raccordement amont (56) à la paroi circonférentielle (14) et/ou au tube de flamme (30) et est relié dans une zone de raccordement aval (58) à la paroi circonférentielle (14) et/ou au tube de flamme (30) et présente une paroi de guidage d'écoulement (64) définissant radialement l'ouverture de passage (60) entre la zone de raccordement amont (56) et la zone de raccordement aval (58), et que, à partir de la zone de connexion amont (56), la surface de section d'écoulement (60) diminue vers la zone de sommet (62).

7. Module de chambre de combustion selon la revendication 6, **caractérisée en ce qu'**une vitesse de variation de la surface de section d'écoulement (60) entre la zone de raccordement amont (56) et la zone de sommet (62) diminue au moins par endroits dans la direction de l'axe longitudinal de boîtier (L).

8. Module de chambre de combustion selon la revendication 4 et l'une des revendications 5 à 7, **caractérisée en ce qu'**au moins une et de préférence une ouverture de retour des gaz d'échappement (74) sur deux est prévue dans la région de la zone de sommet (62).

9. Module de chambre de combustion selon l'une des revendications 5 à 8, **caractérisée en ce que** le diaphragme de flamme (34) permet une expansion essentiellement par paliers de l'espace d'écoulement des gaz d'échappement (32) en aval de la zone de sommet (62).

10. Module de chambre de combustion selon l'une des revendications 2 à 4 ou 5 à 9 en cas de renvoi à la revendication 2, **caractérisée en ce que** le dispositif de catalyseur (54) est prévu dans une deuxième zone d'extrémité axiale (50) de l'espace de retour des gaz d'échappement (46).

11. Module de chambre de combustion selon l'une des revendications 2 à 4 ou 10 ou selon l'une des revendications 5 à 9, en cas de renvoi à la revendication 2, **caractérisée en ce que** le dispositif de catalyseur (54) est disposé dans une zone longitudinale centrale (80) de l'espace de retour des gaz d'échappement (46).

12. Module de chambre de combustion selon l'une des revendications 2 à 4 ou 10 ou 11 ou selon l'une des revendications 5 à 9, en cas de renvoi à la revendication 2, **caractérisé en ce qu'**un espace d'alimentation en air de combustion (28) entourant la paroi circonférentielle (14) est ouvert vers la chambre de combustion (18) par une pluralité d'ouvertures d'alimentation en air de combustion (26) prévues dans la paroi circonférentielle (14) et **en ce qu'**une cloison (52) séparant l'espace d'alimentation en air de combustion (28) de l'espace de retour des gaz d'échappement (46) est prévue, le dispositif de catalyseur (54) étant disposé de telle sorte qu'il entoure la cloison (52) et/ou qu'il se raccorde axialement à la cloison (52).

13. Module de chambre de combustion selon la revendication 12, **caractérisée en ce que** le dispositif de catalyseur (54) est disposé entre la cloison (52) et le boîtier (38).

14. Module de chambre de combustion selon l'une des revendications précédentes, **caractérisée en ce que** le boîtier (38) est un boîtier d'échangeur de chaleur essentiellement en forme de pot avec une paroi de fond (40) située axialement à l'opposé du tube de flamme (30) et avec une paroi circonférentielle (42) du boîtier d'échangeur de chaleur entourant le tube de flamme (30) et définissant radialement vers l'extérieur l'espace de retour des gaz d'échappement (46).

15. Chauffage de véhicule, comprenant un module de chambre de combustion (10) selon l'une des revendications précédentes.
